Europäisches Patentamt

**European Patent Office**

Office européen des brevets

(11) Numéro de publication: **0 275 763 B1**

# FASCICULE DE BREVET EUROPEEN

(45) Date de publication de fascicule du brevet: **10.03.93**

(51) Int. Cl.5: **B01J 20/26**, B01J 39/04, C08F 220/34, G21F 9/12, C22B 3/00

(21) Numéro de dépôt: **87402894.7**

(22) Date de dépôt: **17.12.87**

(54) **Procédé d'extraction de cations et son application au traitement d'effluents aqueux.**

(30) Priorité: **19.12.86 FR 8617791**

(43) Date de publication de la demande:
**27.07.88 Bulletin 88/30**

(45) Mention de la délivrance du brevet:
**10.03.93 Bulletin 93/10**

(84) Etats contractants désignés:
**AT BE CH DE ES FR GB GR IT LI LU NL SE**

(56) Documents cités:
EP-A- 0 158 704   EP-A- 0 188 963
FR-A- 943 773   FR-A- 1 588 567
FR-A- 2 553 678   US-A- 2 340 111
US-A- 3 216 786   US-A- 3 995 009

(73) Titulaire: **ELF ATOCHEM S.A.**
**4 & 8, Cours Michelet La Défense 10**
**F-92800 Puteaux(FR)**

(72) Inventeur: **Candau, Sauveur**
**3, rue de Lens**
**F-67000 Strasbourg(FR)**
Inventeur: **Leroy, Maurice**
**20, rue de Labaroche**
**F-67100 Strasbourg(FR)**
Inventeur: **Brunette, Jean-Pierre**
**4, Rond Point de l'Esplanade**
**F-67000 Strasbourg(FR)**
Inventeur: **Mallo, Paul**
**290J, Avenue Napoléon Bonaparte**
**F-92500 Rueil Malmaison(FR)**
Inventeur: **Loret, Jean-François**
**21, rue d'Oslo**
**F-67000 Strasbourg(FR)**
Inventeur: **Waton, Gilles**
**24, Avenue du Général de Gaulle**
**F-67000 Strasbourg(FR)**

(74) Mandataire: **Haicour, Philippe et al**
**ELF ATOCHEM S.A., D.P.I. 4-8, Cours Miche-**
**let La Défense 10 - Cédex 42**
**F-92091 Paris La Defence (FR)**

**Description**

La présente invention se rapporte au domaine du traitement d'effluents aqueux contenant des cations.

Il est déjà connu d'extraire certains métaux d'effluents aqueux au moyen de résines échangeuses d'ions. Par exemple le brevet FR-A-2.068.158 décrit l'extraction du strontium-90 à partir d'un effluent irradié en rendant cet effluent suffisamment alcalin pour lui conférer un pH au moins égal à 10 puis en le faisant passer à travers une résine d'acide carboxylique échangeuse de cations. Par ailleurs il est connu par le brevet US-A-4.156.658 de fixer des ions radioactifs, tels que strontium-90 et césium-137, dans le sol en injectant une composition chimique dans le sol contenant lesdits ions radioactifs, ladite composition chimique comprenant dé l'acrylate de sodium, de l'acrylamide et de la N,N'-méthylène bis acrylam'de susceptibles de polymériser pour former une structure gélifiée, puis en injectant un initiateur et un catalyseur dans le sol pour effectuer la polymérisation et la formation d'un gel échangeur d'ions dans le sol, de manière à ce que le sol et les ions soient liés physiquement par la structure gélifiée et à ce que les ions soient fixés chimiquement par les propriétés échangeuses d'ion du gel. Il est également connu par le brevet US-A-4.235.737 de traiter un liquide aqueux ou organique contenant des particules radioactives en solution ou en suspension, ledit liquide ayant un pH supérieur à 5,5, en lui ajoutant une quantité efficace d'un absorbeur constitué du sel alcalin d'un polyacrylonitrile greffé sur de l'amidon, l'élément radioactif plus particulièrement concerné par ce procédé est l'iode et la quantité de polymère utilisé pour ce traitement varie de préférence entre 1 et 2000 fois le poids du liquide radioactif.

Par ailleurs le brevet US-A-3.995.009 décrit un procédé d'échange d'ions par mise en contact d'une résine échangeuse cationique sous forme d'ammonium, telle que par exemple un copolymère acrylique-divinylbenzène possèdant un groupe fonctionnel acide carboxylique, avec une solution aqueuse de fluorure d'uranyle. Le brevet US-A-3.216.786 décrit un procédé de récupération de métaux lourds à partir d'une solution ayant un pH d'au moins 4 et contenant des composés dans lesquels lesdits métaux sont présents sous forme de cations, comprenant :

(a) la mise en contact de ladite solution avec une résine échangeuse d'ions légèrement acide, cette résine comprenant une matrice réticulée laquelle est lié un acide carboxylique, ladite matrice étant obtenue en copolymérisant de 0,5% à 50% en poids d'un monomère (réticulant) polyéthyléniquement insaturé et de 50 à 99,5% en poids d'un monomère monoéthyléniquement insaturé (par exemple l'acide acrylique ou l'acide méthacrylique) dans un solvant organique, et en éliminant le solvant organique occlus du copolymère réticulé de manière à obtenir une structure spongieuse, puis

(b) la régénération de la résine échangeuse d'ions en lavant ladite résine au moyen d'un acide pour éliminer le métal lourd absorbé.

Enfin le brevet FR-A-2.553.678 décrit des polymères d'acrylamides ou méthacrylamides N-alcoyl ou N-alcoylène substitués et des copolymères desdits (méth)acrylamides comprenant jusqu'à 30% en poids d'au moins un comonomère ionique tel que notamment l'acide acrylique, l'acide méthacrylique et leurs sels. Ces (co)polymères, préparés par exemple en suspension en phase inverse, possèdent une capacité d'absorption d'eau variant en fonction de la température de telle sorte que, une fois chauffés, ils subissent une contraction même en présence d'un large excés d'eau afin de libérer l'eau une fois absorbée. Leur capacité d'absorption d'eau n'est pas sensiblement affectée par la présence d'un sel minéral dans l'eau. Lorsqu'une solution aqueuse contient un soluté de faible poids moléculaire, comme par exemple un sel minéral, elle peut être absorbée par ce polymère tout en contenant encore ledit soluté.

Ainsi il ressort de cette revue de l'état de la technique que des polymères acryliques ont été proposés pour le traitement d'effluents aqueux contenant notamment des ions radioactifs, sous la forme de résines échangeuses ou bien dans le contexte particulier d'une extraction souterraine. Dans le cas du brevet US-A-4.235.737, il convient de noter que la quantité pondérale de polymère mise en oeuvre, toujours supérieure à la quantité de liquide à traiter, limite l'application du procédé à des effluents de valeur particulièrement élevée, en raison du prix de revient élevé du polymère.

Il convient de rappeler ici qu'une résine échangeuse d'ions est un composé solide non gonflable qui conserve sa structure physique pendant le processus d'échange d'ions. Au contraire les polymères acryliques possédant un certaine capacité d'absorption d'eau sont capables de passer de l'état de poudre à l'état de gel, c'est-à-dire de modifier leur structure physique.

Le problème que la présente invention s'est proposée de résoudre consiste à extraire des cations à partir d'effluents aqueux en contenant, de manière efficace et économique quelle que soit la concentration des cations dans ledits effluents, en évitant le recours à des résines échangeuses d'ions coûteuses et d'efficacité insuffisante. Par extraction économique on entend ici que le procédé à définir devrait être apte, grâce à la mise en jeu de proportions très faibles par rapport à l'effluent aqueux à traiter, à une utilisation dans les domaines très variés où l'on cherche à épurer ces effluents de cations indésirables ou bien à

2

contrôler la teneur de ces effluents en certains cations utiles.

Un premier objet de la présente invention consiste en un procédé d'extraction de cations à partir d'un effluent aqueux en contenant, caractérisé en ce qu'on introduit dans ledit effluent une quantité efficace d'au moins un polymère ou copolymère, physiquement ou chimiquement réticulé, à base d'au moins 50% environ en moles d'acrylate alcalin ou alcalino-terreux ou d'ammonium et d'au plus 50% environ en moles d'acide acrylique.

Lorsqu'il n'est pas spontanément physiquement réticulé par le choix d'un procédé de fabrication approprié, le polymère ou copolymère utilisé dans le cadre de la présente invention peut comprendre en outre une quantité efficace d'au moins un agent de réticulation chimique. Selon le procédé de fabrication retenu pour ledit polymère, cette quantité pourra atteindre jusqu'à environ 5% en poids, et de préférence entre 0,04 % et 3 % en poids, par rapport à la somme des monomères constitutifs.

Comme agent de réticulation utilisable dans le cadre de la présente invention on peut citer par exemple :

1) des composés ayant au moins deux doubles liaisons polymérisables et,

2) des composés ayant au moins une double liaison liaison polymérisable et au moins un groupe fonctionnel réactif avec au moins l'un des monomères constitutifs du polymère.

3) des composés ayant au moins deux groupements fonctionnels réactifs avec au moins l'un des monomères constitutifs du polymère.

Des exemples des composés répertoriés en premièrement ci-dessus, ayant au moins deux doubles liaisons polymérisables, sont :

a) les composés di- ou polyvinyliques, tels que notamment le divinylbenzène, le divinyltoluène, le divinylxylène, l'éther divinylique, la divinylcétone et le trivinylbenzène,

b) les di- ou polyesters d'acides mono- ou polycarboxyliques insaturés avecdes polyols, tels que les esters des acides di- ou tri(méth)acryliques avec des polyols (tels qu'éthylène glycol, triméthylolpropane, glycérol, polyoxyéthylèneglycols, polyoxypropylèneglycols, etc.), les polyesters insaturés (que l'on peut obtenir par réaction de l'un quelconque des polyols précités avec un acide insaturé tel que l'acide maléique), les esters d'acide di- ou tri-(meth)acrylique que l'on peut obtenir par réaction d'un polyépoxide avec l'acide (méth)acrylique,

c) les bis (méth)acrylamides tels que le N,N-méthylène-bis-acrylamide et le glyoxal-bis-acrylamide,

d) les esters carbamyliques que l'on peut obtenir en faisant réagir des polyisocyanates (tels que toluène diisocyanate, hexaméthylène diisocyanate, 4,4'-diphénylméthane diisocyanate, ainsi que les prépolymères contenant un groupe NCO obtenus en faisant réagir un tel diisocyanate avec des composés contenant des atomes d'hydrogène actifs) avec des monomères contenant des groupes hydroxyles. De tels esters carbamyliques sont notamment ceux des acides di(méth)acryliques que l'on peut obtenir en faisant réagir les diisocyanates précités avec le (méth)acrylate d'hydroxyéthyle,

e) les éthers di- ou poly(méth)allyliques de polyols tels que les alkylène glycols, le glycérol, les polyalkylèneglycols, les polyoxyalkylènepolyols et les hydrates de carbone), tels que l'éther diallylique du polyéthylène glycol, l'amidon allylé et la cellulose allylée,

f) les esters di- ou polyallyliques d'acides polycarboxyliques tels que le phthalate de diallyle, l'adipate de diallyle etc., et

g) les esters d'acides mono- ou polycarboxyliques non saturés avec des éthers mono(méth)allyliques de polyols, tels que l'ester de l'acide (méth)acrylique avec l'éther monoallylique du polyéthylène glycol.

Les composés du type deuxièmement précité ayant au moins une double liaison polymérisable et au moins un groupe fonctionnel réactif avec au moins l'un des monomères sont les composés éthyléniquement insaturés conte nant au moins un groupe réactif avec les groupes carboxyle, anhydride carboxylique, hydroxyle, amine ou amide. Des exemples de ces composés sont la N-méthylol(méth)acrylamide, le (méth)-acrylate de glycidyle, etc.

Les composés du type troisièmement précité, ayant au moins deux groupements fonctionnels réactifs avec au moins l'un des monomères constitutifs du polymère, sont :

- les composés hydrosolubles dérivés de l'éther diglycidyle tels que, par exemple, le (poly)éthylène glycol diglycidyléther, le (poly)propylèneglycol diglycidyl éther et le (poly)glycerol diglycidyl ether.

- les composés haloépoxydés tels que, par exemple, l'épichlorhydrine et l'-méthylépichlorhydrine.

- les composés isocyanates tels que notamment l'hexaméthylène diisocyanate.

Les polymères et copolymères utilisables selon la présente invention peuvent être obtenus par polymérisation en présence d'au moins un générateur de radicaux libres, soit en solution aqueuse, soit en émulsion inverse ou en suspension en présence d'au moins un agent émulsifiant. Ces techniques de polymérisation sont bien connues de l'homme de l'art. Différents moyens de générer des radicaux libres peuvent être utilisés, notamment les microondes, rayonnements béta, gamma ou ultra-violet, ou encore des initiateurs chimiques. Dans ce dernier cas l'initiateur de polymérisation peut être notamment choisi parmi les persulfates, les peroxydes, les hydroperoxydes et les composés diazoïques, lorsqu'un persulfate est choisi en tant qu'initiateur, il peut être utilisé en combinaison avec un réducteur choisi parmi les polyhydrophénols, le sulfite et le bisulfite de sodium, le diméthylaminopropionitrile, les diazomercaptans, les ferricyanures et le sulfate ferreux. L'initiateur et, le cas échéant, le réducteur sont utilisables à raison d'environ 0,05 à 2 % chacun en poids par rapport à la somme des monomères constitutifs du polymère. Les polymères ou copolymères obtenus selon ces procédés se présentent avantageusement sous forme de particules de dimension moyenne comprise entre 1 et 1000 $\mu$m environ.

Il est important de noter que le polymère ou copolymère utilisable selon l'invention est efficace, pour l'extraction de cations à partir d'un effluent aqueux, en très faible quantité par rapport à celui-ci. Avantageusement ledit polymère ou copolymère sera utilisé en une quantité comprise entre 0,02 et 20 g environ par litre environ d'effluent aqueux. Par effluent aqueux au sens de la présente invention on entend aussi bien les solutions aqueuses que les mélanges biphasiques comprenant une phase aqueuse.

Les cations soumis à extraction par le procédé selon l'invention peuvent être de natures extrêmement variées. Ils peuvent être notamment choisis parmi le proton, le deutéron, l'ion tritium, l'ion ammonium, les ions ammonium quaternaires et les cations des métaux des groupes IA, IIA, IVA, VA ,VIII, IB, IIB et VB de la Classification Périodique ainsi que des lanthanides et des actinides. Des exemples de tels cations métalliques sont les cations monovalents du sodium, du potassium, du césium et de l'argent, les cations divalents du magnésium, du calcium, du strontium, du baryum, du radium, du fer, du cobalt, du zinc, du cuivre, du nickel, du cadmium, du plomb et du mercure, les cations trivalents de l'europium, du bismuth et du lanthane, les cations tétravalents du vanadium, du cérium et du thorium et les cations hexavalents de l'uranium. Dans les effluents aqueux dans lesquels ils sont présents, les cations à extraire peuvent être associés aux anions les plus variés, tels que notamment halogénure, nitrate, sulfate, oxalate, carbonate, hydrogénocarbonate, acétate, etc. ou encore à des ligands complexants.

Le pH de l'effluent aqueux soumis au procédé d'extraction de cations selon l'invention est avantageusement compris entre 2 et 5 environ. Il est important de noter que dans certains cas le pH de l'effluent aqueux après extraction peut être supérieur de jusqu'à 3 unités au pH initial dudit effluent aqueux.

Le procédé d'extraction selon l'invention peut être effectué en une ou plusieurs étapes. Lorsque ledit procédé est effectué en plusieurs étapes, la partie de l'effluent aqueux n'ayant pas été absorbée par le polymère peut être séparée du polymère gonflé puis transférée dans un récipient dans lequel on introduit à nouveau une quantité efficace de polymère neuf, et ainsi de suite. En répétant cette opération le nombre de fois nécessaire, on peut ainsi grâce à la présente invention soit épurer quasi totalement l'effluent aqueux de cations indésirables soit contrôler la teneur de cet effluent en certains cations utiles.

Un second objet de la présente invention consiste donc en l'application du procédé précédemment défini au traitement d'effluents aqueux, tels que le traitement des eaux de source, la déminéralisation de l'eau, la décontamination d'effluents aqueux contenant des déchets radioactifs (tels que ceux pouvant être issus de centrales à combustible nucléaire), le traitement des eaux usées ou le traitement d'effluents aqueux industriels contenant des résidus métalliques dissous (tels que les résidus catalytiques provenant d'installations de polymérisation des oléfines). Dans le cas du traitement d'effluents aqueux contenant des déchets radioactifs, l'avantage de la présente invention réside notamment dans le fait que les métaux radioactifs se trouvent concentrés dans un faible volume et sous une forme (polymère gonflé) compatible avec l'enrobage au moyen, par exemple, de béton.

Dans certains cas, notamment lorsque les cations métalliques sont des cations de métaux précieux tels que l'or, l'argent ou le platine, ou bien des cations de métaux rares tels que le vanadium, l'iridium ou l'uranium, le métal emprisonné dans le gel peut être récupéré, notamment en brûlant ledit gel.

Le procédé de traitement d'effluents aqueux selon l'invention, par mise en contact avec un polymère ou copolymère tel que spécifié précédemment, présente l'avantage considérable d'être efficace même lorsque la concentration en cations dans l'effluent aqueux est extrêmement faible. Ainsi on pourra éliminer jusqu'à plus de 80 % de certains cations lorsque leur concentration dans l'effluent est au plus égale à 10 ppm. Le procédé de traitement selon l'invention peut d'autre part être effectué à une température quelconque comprise entre 5°C et 80°C environ.

Les exemples ci-après sont donnés à titre illustratif et non limitatif de la présente invention.

EXEMPLES 1 à 3

A la température de 18°C, une masse $m_i$ (exprimée en grammes) de polymère est agitée pendant environ 15 minutes avec 50 ml de solution aqueuse de chlorures contenant des cations métalliques $M^{n+}$ (n étant la valence du métal M) à des concentrations $C_i$ (exprimées en ppm). Le polymère utilisé est un copolymère physiquement réticulé comprenant 80 % en moles de motifs dérivés de l'acrylate de sodium et 20 % en moles de motifs dérivés de l'acide acrylique.

Le polymère se gonfle en fixant en partie les ions métalliques. Le gonflement du polymère est mesuré par pesée du gel après filtration (masse finale $m_f$ exprimée en grammes). Les concentrations en cations métalliques dans la solution surnageante sont alors déterminées, selon l'élément, par absorption ou émission atomique, de manière à calculer la proportion (exprimée en %) de cations fixés dans le gel. Les résultats sont indiqués dans le tableau I ci-après.

EXEMPLES 4 à 7

On répète la procédure opératoire des exemples 1 à 3, si ce n'est que la solution aqueuse soumise à extraction est une solution de nitrates. Les résultats sont indiqués dans le tableau I ci-après.

EXEMPLE 8

A la température de 20°C, une masse $m_i = 1$ gramme de polymère est placée dans un bécher contenant 500 ml d'une solution nutritive contenant des cations $M^{n+}$ à des concentrations $C_i$ (exprimées en ppm). Le polymère utilisé est un copolymère réticulé comprenant 75 % en moles de motifs dérives de l'acrylate de sodium et 25 % en moles de motifs dérivés de l'acide acrylique, "commercialisé" par la société NORSOLOR (ELF ATOCHEM) sous la marque AQUAKEEP X 5. L'ensemble est laissé sous agitation durant 2 heures, puis filtré sur toile métallique de porosité 100 mesh. Le polymère se gonfle en fixant en partie les ions. Le gonflement du polymère est mesuré par pesée du gel après filtration (masse finale $m_f$ exprimée en grammes). Les concentrations en cations dans l'éluat sont déterminées par spectrophotométrie de flamme (Mg et K) et par la technique de Nessler ($NH_4$), de manière à calculer la proportion (exprimée en %) de cations fixés dans le gel. Les résultats sont indiqués dans le tableau ci-après.

## TABLEAU I

| Exemple | $M^{n+}$ | $C_i$ | $m_i$ | $m_f$ | % |
|---------|----------|-------|-------|-------|---|
| 1 | $Sr^{++}$ | 1000 | 0,20 | 15,7 | 91 |
|   | $Cs^+$ | 1250 |  |  | 46 |
| 2 | $Sr^{++}$ | 500 | 0,1 | 12,2 | 97 |
| 3 | $Sr^{++}$ | 1000 | 0,1 | 0,46 | 60 |
| 4 | $Cs^+$ | 8,8 | 0,0024 | 1,8 | 37 |
|   | $Ag^+$ | 8,2 |  |  | 89 |
| 5 | $Ca^{2+}$ | 5,5 |  |  | 30 |
|   | $Co^{2+}$ | 9,0 | 0,0021 | 0,08 | 42 |
|   | $Sr^{2+}$ | 13,2 |  |  | 35 |
| 6 | $Cs^+$ | 8,9 |  |  | 82 |
|   | $Ca^{2+}$ | 3,4 |  |  | 84 |
|   | $Co^{2+}$ | 5,1 | 0,02 | 14,5 | 85 |
|   | $Sr^{2+}$ | 7,6 |  |  | 94 |
|   | $Ag^+$ | 8,7 |  |  | 93 |
| 7 | $Co^{2+}$ | 8,3 | 0,002 | 2,24 | 82 |
| 8 | $Mg^{++}$ | 36 |  |  | 92 |
|   | $K^+$ | 414 | 1 | 140 | 68 |
|   | $NH_4^+$ | 186 |  |  | 61 |

EXEMPLE 9

A la température de 20°C, on place une solution aqueuse de sulfate de vanadyle pentahydrate $VOSO_4$, $5H_2O$ de couleur bleue dans un bécher. On ajoute alors un peu du polymère utilisé à l'exemple 8 tout en agitant pendant quelques minutes. On observe une décoloration progressive de la solution tandis que le polymère se gonfle sous forme d'un gel de couleur bleue.

EXEMPLE 10

A la température de 20°C, on place une solution aqueuse de nitrate d'uranyle hexahydrate $UO_2(NO_3)_2$, $6 H_2O$ de couleur jaune dans un bécher. On ajoute alors le même polymère qu'à l'exemple précédent, tout en agitant pendant quelques minutes. On observe une décoloration progressive de la solution tandis que le polymère se gonfle sous forme d'un gel de couleur jaune.

EXEMPLES 11 à 18

On met en contact 50 ml d'une liqueur aqueuse (dont le pH est ajusté à 4 par addition d'acide nitrique) contenant 10 ppm d'un métal sous forme de cation $M^{n+}$ avec 2 mg de copolymère sec. Le copolymère utilisé comprend x % en moles de motifs dérivés de l'acrylate de sodium, (100-x) % en moles de motifs dérivés de l'acide acrylique et y % en poids de diacrylate de diéthylèneglycol par rapport à la somme de l'acide acrylique et de l'acrylate de sodium.

La mise en contact est effectuée durant 30 min. à la température de 25°C, après quoi la solution est filtrée et dosée.

Le taux de métal retenu par le gel (exprimé en % et indiqué au tableau II ci-après) est calculé par la formule :

$$\% = (C_oV_o - C_fV_f)/C_oV_o$$

où $C_o$ et $V_o$ sont la concentration métallique et le volume initiaux de la solution aqueuse et $C_f$ et $V_f$ sont ceux de la solution aqueuse non emprisonnée dans le gel après contact.

Le tableau II ci-après indique les résultats obtenus pour différents métaux en faisant varier x et y, c'est-à-dire le taux de neutralisation de l'acide acrylique dans le copolymère et le taux de réticulation du copolymère.

### TABLEAU II

| Exemple | $M^{n+}$ | x | y | % |
|---------|----------|-----|-----|-----|
| 11 | Ir | 80 | 0,5 | 90 |
| 12 | Pb | 80 | 0,5 | 80 |
| 13 | $Eu^{3+}$ | 80 | 0,2 | 99 |
| 14 | $La^{3+}$ | 80 | 0,5 | 98 |
| 15 | $Th^{4+}$ | 80 | 0,5 | 65 |
| 16 | $Eu^{3+}$ | 60 | 0,2 | 90 |
| 17 | $La^{3+}$ | 60 | 0,2 | 96 |
| 18 | $Th^{4+}$ | 60 | 0,2 | 84 |

## Revendications

1. Procédé d'extraction de cations choisis parmi le proton, le deutéron, l'ion tritium, l'ion ammonium, les ions ammonium quaternaires, les cations des métaux des groupes IA, IIA, IVA, VA, VIII, IB, IIB et VB de la classification périodique ainsi que des lanthanides et des actinides, ces cations étant contenus dans un effluent aqueux, caractérisé en ce qu'on introduit, dans ledit effluent, au moins un polymère ou copolymère constitué d'au moins 50 % en moles d'acrylate alcalin ou alcalino-terreux ou d'ammonium et d'au plus 50 % en moles d'acide acrylique et possédant une capacité d'absorption d'eau permettant le passage de l'état de poudre à l'état de gel.

2. Procédé d'extraction de cations selon la revendication 1, caractérisé en ce que le polymère ou copolymère est utilisé en une quantité comprise entre 0,02 et 20 grammes par litre d'effluent aqueux.

3. Procédé d'extraction de cations selon l'une des revendications 1 et 2, caractérisé en ce que le pH de l'effluent aqueux soumis à extraction est compris entre 2 et 5.

4. Procédé d'extraction de cations selon l'une des revendications 1 à 3, caractérisé en ce que le polymère ou copolymère est utilisé sous forme de particules de dimension moyenne comprise entre 1 à 1000 micrometres

5. Procédé d'extraction de cations selon l'une des revendications 1 à 4, caractérisé en ce que le polymère utilisé est à base d'au plus 50 % en moles d'acide acrylique, et d'au moins 50 % en moles d'acrylate alcalin.

**6.** Procédé d'extraction de cations selon l'une des revendications 1 à 5, caractérisé en ce que le polymère ou copolymère utilisé comprend, en outre, jusqu'à 5 % en poids par rapport à la somme des monomères constitutifs du polymère d'au moins un agent de réticulation chimique.

**7.** Procédé d'extraction de cations selon l'une des revendications 1 à 6, caractérisé en ce que la concentration en cations dans l'effluent est au plus égale à 10 ppm.

**8.** Procédé d'extraction de cations selon l'une des revendications 1 à 7 caractérisé en ce que l'extraction est effectuée à une température comprise entre 5 et 80°C.

**9.** Procédé de traitement d'effluents aqueux comportant une étape d'extraction de cations conforme au procédé selon l'une des revendications 1 à 8.

**10.** Procédé de traitement selon la revendication 9, caractérisé en ce que ledit traitement consiste en la décontamination d'effluents contenant des déchets radioactifs.

**11.** Procédé de traitement selon la revendication 10, caractérisé en ce que, postérieurement audit traitement, le polymère gonflé obtenu à l'issue de l'étape d'extraction de cations est enrobé au moyen de béton.

**12.** Procédé de traitement selon la revendication 9, caractérisé en ce que, postérieurement audit traitement, le polymère gonflé obtenu à l'issue de l'étape d'extraction de cations est brûlé en vue de récupérer le métal dudit cation.

**Claims**

**1.** Process for the extraction of cations chosen from the proton, the deuterium ion, the tritium ion, the ammonium ion, the quaternary ammonium ions and the cations of the group IA, IIA, IVA, VA, VIII, IB, IIB and VB metals of the periodic classification as well as of lanthanides and actinides, these cations being contained in an aqueous effluent, characterised in that there is introduced, into the said effluent, at least one polymer or copolymer consisting of not less than 50 mol% of alkali metal or alkaline-earth or ammonium acrylate and of not more than 50 mol% of acrylic acid and which has a water-absorption ability which makes it possible to change from the powder form to the gel form.

**2.** Process for the extraction of cations according to Claim 1, characterised in that the polymer or copolymer is used in a quantity of between 0.02 and 20 grams per litre of aqueous effluent.

**3.** Process for the extraction of cations according to either of Claims 1 and 2, characterised in that the pH of the aqueous effluent subjected to extraction is of between 2 and 5.

**4.** Process for the extraction of cations according to one of Claims 1 to 3, characterised in that the polymer or copolymer is used in the form of particles with a mean size of between 1 and 1000 micrometres.

**5.** Process for the extraction of cations according to one of Claims 1 to 4, characterised in that the polymer used is based on not more than 50 mol% of acrylic acid and on not less than 50 mol% of alkali metal acrylate.

**6.** Process for the extraction of cations according to one of Claims 1 to 5, characterised in that the polymer or copolymer used additionally comprises up to 5 % by weight, with respect to the sum of the constituent monomers of the polymer, of at least one chemical crosslinking agent.

**7.** Process for the extraction of cations according to one of Claims 1 to 6, characterised in that the concentration of cations in the effluent is not more than 10 ppm.

**8.** Process for the extraction of cations according to one of Claims 1 to 7, characterised in that the extraction is carried out at a temperature of between 5 and 80°C.

9. Process for the treatment of aqueous effluents which includes a cation extraction stage in accordance with the process according to one of Claims 1 to 8.

10. Treatment process according to Claim 9, characterized in that the said treatment consists of the decontamination of effluents containing radioactive waste.

11. Treatment process according to Claim 10, characterised in that, subsequent to the said treatment, the swollen polymer obtained from the cation extraction stage is coated with concrete.

12. Treatment process according to Claim 9, characterised in that, subsequent to the said treatment, the swollen polymer obtained from the cation extraction stage is burnt for the purpose of recovering the metal of the said cation.

**Patentansprüche**

1. Verfahren zur Extraktion von Kationen, als da sind das Proton, das Deuteron, das Tritium-Ion, das Ammonium-Ion, quartäre Ammonium-Ionen, die Metallkationen der Gruppen Ia, IIa, IVa, Va, VIII, Ib, IIb und Vb, des Periodensystems sowie der Lanthaniden und der Actiniden, wobei diese Kationen in einem Abwasser enthalten sind, und das Verfahren dadurch gekennzeichnet ist, daß zu besagtem Abwasser mindestens ein Polymer oder Copolymer zugegeben wird, das wenigstens 50 Molprozent Alkali-, Erdalkali- oder Ammoniumacrylat und höchstens 50 Molprozent Acrylsäure enthält und das die Fähigkeit zur Wasseraufnahme besitzt, so daß der Übergang vom festen in den Gel-Zustand ermöglicht wird.

2. Verfahren zur Extraktion von Kationen nach Anspruch 1, dadurch gekennzeichnet, daß die Menge des verwendeten Polymers oder Copolymers zwischen 0,02 und 20 Gramm pro Liter Abwasser liegt.

3. Verfahren zur Extraktion von kationen nach einem der Ansprüche 1 und 2, dadurch gekennzeichnet, daß der pH-Wert des Abwassers, das der Extraktion unterworfen wird, zwischen 2 und 5 liegt.

4. Verfahren zur Extraktion von Kationen nach einem der Ansprüche 1 bis 3, dadurch gekennzeichnet, daß das Polymer oder Copolymer in Form von Teilchen einer mittleren Größe zwischen 1 und 1000 Mikrometern verwendet wird.

5. Verfahren zur Extraktion von Kationen nach einem der Ansprüche 1 bis 4, dadurch gekennzeichnet, daß der Grundbestandteil des verwendeten Polymers aus höchstens 50 Molprozent Acrylsäure und mindestens 50 Molprozent Alkaliacrylat besteht.

6. Verfahren zur Extraktion von Kationen nach einem der Ansprüche 1 bis 5, dadurch gekennzeichnet, daß das verwendete Polymer oder Copolymer zusätzlich bis zu 5 Gewichtsprozent, bezogen auf die Summe der Monomere, aus denen das Polymer besteht, eines chemischen Vernetzungsmittels enthält.

7. Verfahren zur Extraktion von Kationen nach einem der Ansprüche 1 bis 6, dadurch gekennzeichnet, daß die Konzentration der Kationen im Abwasser maximal 10 ppm beträgt.

8. Verfahren zur Extraktion von Kationen nach einem der Ansprüche 1 bis 7, dadurch gekennzeichnet, daß die Extraktion bei einer Temperatur zwischen 5 und 80°C durchgeführt wird.

9. Verfahren zur Behandlung von Abwässern unter Einbeziehung einer Stufe zur Extraktion von Kationen, welche dem Verfahren nach einem der Ansprüche 1 bis 8 entspricht.

10. Verfahren zur Behandlung nach Anspruch 9, dadurch gekennzeichnet, daß diese Behandlung in der Dekontamination von Abwässern besteht, welche radioaktive Stoffe enthalten.

11. Verfahren zur Behandlung nach Anspruch 10, dadurch gekennzeichnet, daß im Anschluß an besagte Behandlung das nach der Extraktion der Kationen erhaltene gequollene Polymer mit Beton umhüllt wird.

**12.** Verfahren zur Behandlung nach Anspruch 9, dadurch gekennzeichnet, daß im Anschluß an besagte Behandlung das nach der Extraktion der Kationen erhaltene gequollene Polymer verbrannt wird, um das Metall des besagten Kations zurückzugewinnen.